# EUROPEAN PATENT APPLICATION

(11) **EP 4 000 924 A1**
(43) Date of publication of application: **25.05.2022**
(21) Application number: 20208648.4
(22) Date of filing: 19.11.2020
(51) Int. Cl.: B32B 27/08, B32B 27/32, C08J 5/18

(54) **POLYETHYLENE FILM STRUCTURES FOR SAFER COLATION-SHRINK FILMS**

(71) Applicant: Borealis AG, 1020 Vienna (AT); Abu Dhabi Polymers Co. Ltd (Borouge) LLC, Abu Dhabi (AE)
(72) Inventor: SEMAAN, Chantal, 08008 Barcelona (ES); GITSAS, Antonios, 4021 Linz (AT)
(74) Representative: Kador & Partner PartG mbB

(57) **Abstract**

The present invention relates to a layered film structure comprising a core layer C and external layers E1 and E2 wherein core layer C comprises a multimodal ethylene terpolymer (I) having an MFR₅ of from 0.5 to 5 g/10min and a density of 0.928 to 0.940 g/cm³ and wherein external layer(s) E1 and/or E2 comprise(s) a multimodal ethylene terpolymer (II) having an MFR₂ of from 0.5 to 10 g/10min and a density of 0.920 to 0.935 g/cm³, to a process for producing the layered film structure wherein the layers of the film structure are co-extruded, to a collation shrink film comprising or consisting of the layered film structure and to the use of the collation shrink film for wrapping of articles.

## Description

The present invention relates to a layered film structure comprising a core layer and external layers, to a process for producing a layered film structure by coextrusion of the layers, to a collation shrink film comprising the layered film structure, and to the use of the collation shrink film for wrapping of articles.

Collation shrink films are films structures that are wrapped around an object to be packaged and shrunk to keep the units within the object together. The basic principle of collation shrink is to over-wrap a number of items in a loose film "sleeve" and then pass the wrapped goods through a heated shrink tunnel/oven to cause the collation shrink wrapping to occur. The film collapses around the multiple items and holds them in place. The most common use of these films is in the packaging of multiple containers (items), such as bottles or cans which might contain food, beverages and so on. The collation shrink film is wrapped around a number of the containers, for example a 6-pack of drinks or 24-pack of food cans, optionally held in a cardboard tray or pad, and shrunk around the containers.

Still today up to 5-10% of the merchandise is wasted during transportation. Improving the stability of the wrapped packs with improved collation-shrink film structures would allow the producers to have fewer losses. With today's challenges and overall direction of reducing the film thickness, the pack stability is further compromised.

Thus, for being suitable for use as a collation shrink film, a film structure needs to have a specific combination of properties: First and foremost, the film structure must show a good shrinkage behaviour in order to hold the wrapped goods tightly. Furthermore, suitable film structures need to have good mechanical properties such as high stiffness, especially in view of down-gauge ability and pack stability, and good tensile properties.

Still further, puncture resistance and tear resistance are among the most important properties for collation shrink films in order to provide sufficient pack stability and to enable safe handling of the package.

Good optical appearance is also required at the same time for the pack stand out on the shelf, i.e. consumer perception at the selling points.

Low Density Polyethylene (LDPE) currently dominates the collation films market segment with its good shrink behaviour, especially in transverse direction (TD). It is known, however, that multimodal LLDPE exhibits significant benefits over LDPE when blended with other linear low density polyethylene and high density polyethylene components.

Thus, current collation shrink film solutions are film structures comprising LDPE and LLDPE and/or HDPE. The LDPE is necessary to give a high shrink rate and the LLDPE / HDPE component gives a combination of stiffness, toughness and bundling force (also known as cold shrink force).

For example, WO 2017/055174 discloses a collation shrink film which is based on a coextruded film structure comprising two layers A and B each made from specific ethylene copolymers.

It is an object of the present invention to provide a film structure suitable for use as a collation shrink film which fulfils the above requirements, especially a film structure which has an improved stability, shrinkage behaviour and, at the same time, an excellent optical appearance.

The present invention is based on the finding that such a film structure for a collation shrinkage film can be provided by a layered film structure comprising a core and two external layers which comprise specifically selected ethylene terpolymers in the core and at least one of the external layers.

The present invention therefore provides a layered film structure comprising, or consisting of, a core layer C and external layers E1 and E2 wherein core layer C comprises, or consists of, a multimodal ethylene terpolymer (I) having an MFR₅ of from 0.5 to 5 g/10min and a density of 0.928 to 0.940 g/cm³ and wherein external layer(s) E1 and/or E2 comprise(s), or consist(s) of a multimodal ethylene terpolymer (II) having an MFR₂ of from 0.5 to 10 g/10min and a density of 0.920 to 0.935 g/cm³.

The combination of a core layer C and external layers E1 and E2 as characterized above solve the above described objects. In particular, this combination allows for an improved contraction force of the film structure so that in use as collation shrink film pack stability is enhanced, it has a better mechanical performance which offers better safety of the package (holding together the bottles; carrying the package by the film without break) and, simultaneously, excellent optical properties are obtained.

Due to the improved shrinkage behaviour and mechanical properties the collation film thickness may be reduced, in particular for low thickness packaging (<50 micrometer).

Usually, multimodal ethylene terpolymer (I) is different from multimodal ethylene terpolymer (II).

Preferably, in the layered film structure the multimodal ethylene terpolymer (I) is bimodal and is either a terpolymer comprising, or consisting of
a) a low molecular weight homopolymer of ethylene and b) a high molecular weight terpolymer of ethylene, 1-butene and a C₆ to C₁₂ alpha-olefin,
   or a terpolymer comprising, or consisting of
a) a low molecular weight polymer which is a binary copolymer of ethylene and a C₄ to C₁₂ alpha-olefin and
b) a high molecular weight polymer which is either a binary copolymer of ethylene and 1-butene, if the low molecular weight polymer of a) is a binary copolymer of ethylene and a C₆ to C₁₂ alpha-olefin, or a terpolymer of ethylene, 1-butene and a C₆ to C₁₂ alpha-olefin.

Such bimodal ethylene terpolymers are, for example, disclosed in WO 03/066698. As far as definitions (such as for the "modality" of a polymer) and production methods for these ethylene terpolymers are concerned it is referred to WO 03/066698. Furthermore, all embodiments and preferred embodiments of such ethylene terpolymers as described in WO 03/066698, which have a density in the range of 0.928 to 0.940 g/cm³ are also preferred embodiments of ethylene terpolymer (I) in the present application, whether or not explicitly described herein.

Preferably, terpolymer (I) has a density in the range of 0.930 to 0.939 g/cm³.

Preferably, the C₄ to C₁₂ alpha-olefin of the low molecular weight copolymer fraction is selected from the group of 1-butene, 1-hexene, 4-methyl-1-pentene, 1-octene and 1-decene.

Furthermore, preferably the C₆ to C₁₂ alpha-olefin of the high molecular weight copolymer fraction is preferably selected from the group of 1-hexene, 4-methyl-1-pentene, 1-octene and 1-decene.

Preferably, terpolymer (I) comprises, or consists of, a) a low molecular weight homopolymer of ethylene and b) a high molecular weight terpolymer of ethylene, 1-butene and a C₆ to C₁₂ alpha-olefin, preferably a high molecular weight terpolymer of ethylene, 1-butene and 1-hexene.

The weight average molecular weight of terpolymer (I) is preferably between 190,000 to 400,000 g/mol, more preferably between 200,000 to 300,000 g/mol. The low molecular weight polymer fraction has a weight average molecular weight preferably of 4,500 to 55,000 g/mol, more preferably of 5,000 to 50,000 g/mol and the high molecular weight polymer has a weight average molecular weight preferably of 450,000 to 1,000,000 g/mol, more preferably of 500,000 to 1,000,000 g/mol.

Terpolymer (I) preferably has a melt flow rate MFR₅ of 0.6 to 4 g/10min, more preferably of 0.7 to 3 g/10min.

Terpolymer (I) preferably has a melt flow rate MFR₂₁ of 10 to 50 g/10min, more preferably of 15 to 45 g/10min.

The low molecular weight polymer fraction of terpolymer (I) preferably has a melt index MFR₂ of 200 to 800 g/10min, more preferably of 300 to 600 g/10min.

Terpolymer (I) preferably comprises 30 to 60 wt.%, more preferably 35 to 50 wt.% and most preferably 38 to 45 wt.% of the low molecular weight polymer fraction, the remainder being preferably the high molecular weight polymer fraction.

The overall comonomer content in the total polymer is preferably 1 to 7 % by mol, more preferably 2 to 6 % by mol.

Preferably, in the low molecular weight polymer the comonomer content is 0 to 2.5 % by mol, more preferably 0 to 2 % by mol. In the high molecular weight polymer is the comonomer content preferably 2.5 to 11 % by mol, more preferably 3 to 10 % by mol.

In the embodiments wherein terpolymer (I) comprises, or consists of, a) a low molecular weight homopolymer of ethylene and b) a high molecular weight terpolymer of ethylene, 1-butene and 1-hexene, it is preferred that the content of 1-butene in the final polymer is 1.0 to 2.0 % by weight and the content of 1-hexene is 4.0 to 6.0 % by weight.

Preferably, terpolymer (I) has a viscosity η measured at 0.05 rad/s of 10,000 to 65,000 Pa·s, more preferably of 15,000 to 60,000 Pa·s, and most preferably of 20,000 to 55,000 Pa·s.

Preferred multimodal terpolymer (I) are also such commercially available as Borshape^{™}, such as BorShape^{™} FX1001 and BorShape^{™} FX1002, from Borealis.

FX1001 is a bimodal LLDPE terpolymer. The low molecular weight fraction is a homopolymer of ethylene having an MFR₂ of 400 g/10 min, preferably produced in a loop reactor. In the high molecular weight fraction, preferably produced in a gas phase reactor, ethylene is co-polymerized with 1-butene and 1-hexene as comonomers. The density of the final resin is 931 kg/m³ and the MFR₅ is 0.85 g/10 min. The split (LMW/HMW) is 39/61. FX1001 has Mw/Mn of about 14 (from 13 to 15). The content of 1-butene in the final polymer is 1.5 % by weight and the content of 1-hexene is 5.5 % by weight. The viscosity η measured at 0.05 rad/s is 52000 (+/-5000) Pa·s.

FX1002 is a bimodal MDPE terpolymer. The low molecular weight fraction is a homopolymer of ethylene having an MFR₂ of 400 g/10 min, preferably produced in a loop reactor. In the high molecular weight fraction, preferably produced in a gas phase reactor, ethylene is co-polymerized with 1-butene and 1-hexene as comonomers. The density of the final resin is 937 kg/m³, the MFR₅ is 2 g/10 min and the MFR₂₁ is 42 g/10 min. The split (LMW/HMW) is 43/57. FX1002 has Mw/Mn of about 12 (from 11 to 13). The content of 1-butene in the final polymer is 1.5 % by weight and the content of 1-hexene is 4.5 % by weight. The viscosity η measured at 0.05 rad/s is 23000 (+/-3000) Pa·s.

Multimodal ethylene terpolymer (II) of the layered film structure of the invention preferably comprises, or consists of, a multimodal polymer of ethylene with at least two different comonomers selected from alpha-olefins having from 4 to 10 carbon atoms, which has a ratio MFR₂₁/MFR₂ of 13 to 30 and a MWD of 5 or less.

Such multimodal ethylene terpolymers are disclosed, for example, in WO 2016/083208. As far as definitions (such as for the "modality" of a polymer) and production methods for these ethylene terpolymers are concerned it is referred to WO 2016/083208. Furthermore, all embodiments and preferred embodiments of such ethylene terpolymers as described in 2016/083208 which have a density in the range a density of 0.910 to 0.935 g/cm³ are also preferred embodiments of ethylene terpolymer (II) in the present application, whether or not explicitly described herein.

Multimodal ethylene terpolymer (II) preferably has a MFR₂ in the range of from 0.5 to 2 g/10min, more preferably from 0.8 to 1.6 g/10min.

Preferably, multimodal ethylene terpolymer (II) has a density of 0.920 to 0.933 g/cm³, more preferably of 0.923 to 0.930 g/cm³.

Multimodal ethylene terpolymer (II) preferably has a ratio MFR₂₁/MFR₂ of 15 to 30, more preferably of 15 to 25.

The at least two alpha-olefin comonomers having from 4 to 10 carbon atoms of multimodal ethylene terpolymer (II) are preferably 1-butene and 1-hexene.

Preferably, the total amount of comonomers present in the multimodal ethylene terpolymer (II) is of 0.5 to 10 mol%, preferably of 1.0 to 8 mol%, more preferably of 1.0 to 5 mol%, more preferably of 1.5 to 5.0 mol% and most preferably 1.1 to 3.0 mol%.

Multimodal ethylene terpolymer (II), which preferably is a bimodal terpolymer, preferably comprises, or consists of, an ethylene polymer component (A) and an ethylene polymer component (B).

Preferably, ethylene polymer component (A) has higher MFR₂ than ethylene polymer component (B).

More preferably, the ethylene polymer component (A) has MFR₂ of 1 to 50 g/10 min, preferably of 1 to 40 g/10 min, more preferably of 1 to 30 g/10 min, more preferably of 2 to 20 g/10 min, more preferably of 2 to 15 g/10 min, and even more preferably of 2 to 10 g/10 min.

The ratio of the MFR₂ of ethylene polymer component (A) to the MFR₂ of the final multimodal ethylene terpolymer (II) preferably is 2 to 50, preferably 5 to 40, more preferably 10 to 30, more preferably 10 to 25, and still more preferably 15 to 25.

The ratio of the MFR₂ of ethylene polymer component (A) to the MFR₂ of the final multimodal terpolymer preferably is of 2 to 10.

Preferably, ethylene polymer component (A) comprises a different comonomer than the ethylene polymer (B).

Preferably, ethylene polymer component (A) has lower amount (mol%) of comonomer than ethylene polymer component (B), more preferably, the ratio of [the amount (mol%) of alpha-olefin comonomer having from 4 to 10 carbon atoms comonomer present in ethylene polymer component (A)] to [the amount (mol%) of at least two alpha-olefin comonomers having from 4 to 10 carbon atoms of the final multimodal polymer of ethylene (a)] is of 0.2 to 0.6, preferably of 0.25 to 0.5.

Preferably, the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

The amount of comonomer in component (A) is preferably from 0.15 to 1.0 mol%.

Preferably, the amount of comonomer in component (B) is 1.5 to 3.5 mol%.

Preferably, ethylene polymer component (A) has different, preferably higher, density than the density of the ethylene polymer component (B).

The density of the ethylene polymer component (A) is preferably 0.925 to 0.950 g/cm³, more preferably 0.930 to 0.945 g/cm³, and most preferably 0.935 to 0.940 g/cm³.

Preferably, the multimodal ethylene terpolymer (II) comprises the ethylene polymer component (A) in an amount of 30 to 70 wt.%, preferably of 40 to 60 wt.%, more preferably of 35 to 50 wt.%, more preferably 40 to 50 wt.% and the ethylene polymer component (B) in an amount of 70 to 30 wt.%, preferably of 60 to 40 wt.%, more preferably of 50 to 65 wt.%, more preferably 50 to 60 wt.%, based on the total amount (100 wt.%) of the multimodal terpolymer (II).

Most preferably, multimodal ethylene terpolymer (II) consists of the ethylene polymer components (A) and (B) as the sole polymer components. Accordingly, the split between ethylene polymer component (A) to ethylene polymer component (B) is of (30 to 70):(70 to 30) preferably of (40 to 60):(60 to 40), more preferably of (35 to 50):(65 to 50), more preferably of (40 to 50):(50 to 60).

Preferred as multimodal ethylene terpolymers (II) are also such commercially available as Anteo^{™} from Borealis or Borouge having the properties as required herein.

Preferably, in the layered film structure according to the invention core layer C comprises 30 wt.% or more of said multimodal ethylene terpolymer (I), more preferably 40 wt.% or more.

In addition to multimodal ethylene terpolymer (I) core layer C may comprise a low density polyethylene (LDPE). LDPEs are well known in the art and are produced in high pressure process usually performed in a tubular reactor or an autoclave.

LDPEs and their production are, for example, described in WO 2017/055174, page 9, line 29 to page 12, line 6, to which it is referred.

Preferably, if an LDPE is present in the core layer, it is used in an amount of 10 to 60 wt.%, more preferably in an amount of from 20 to 50 wt.%.

The LDPE used in layer C preferably has a density of 0.900 to 0.940 g/cm³, more preferably of 0.910 to 0.930 g/cm³, and most preferably of 0.915 to 0.925 g/cm³.

Preferably, the LDPE used in layer C has a MFR₂ of 0.01 to 5 g/10min, more preferably of 0.05 to 3 g/10min, still more preferably 0.1 to 2 g/10 min, and most preferably 0.15 to 1 g/10min.

Furthermore, core layer C may also comprise a high density polyethylene (HDPE). HDPEs are also well known in the art and are usually produced in polymerization processes using a catalyst.

Preferably, if an HDPE is present in the core layer, it is used in an amount of 2.5 to 20 wt.%, more preferably in an amount of from 5 to 15 wt.%.

The HDPE used in layer C preferably has a density of 0.950 to 0.970 g/cm³, more preferably of 0.955 to 0.965 g/cm³.

Preferably, the HDPE used in layer C is an ethylene homopolymer.

Preferably, the HDPE used in layer C has a MFR₂ of 0.05 to 10 g/10min, more preferably of 0.1 to 5 g/10min, still more preferably 0.2 to 3 g/10 min, and most preferably 0.4 to 1.5 g/10min.

In one embodiment core layer C consists of multimodal ethylene terpolymer (I), a LDPE and a HDPE as defined herein.

However, in other embodiments core layer C may also consist of 100 wt.% of multimodal ethylene terpolymer (I), in particular if the film structure comprises more than 3 layers.

External layer(s) E1 and E2 of the layered film structure of the invention may be made of the same polymer composition or of different polymer compositions in any one of the embodiments described herein for the polymer composition usable for layer E1 and/or E2. Preferably, E1 and E2 are made of the same polymer composition.

Preferably, external layer(s) E1 and/or E2 comprise(s) 60 wt.% or more, more preferably comprise 70 wt.% or more of said multimodal ethylene terpolymer (II).

In addition to multimodal ethylene terpolymer (II) external layer E1 and/or E2 may comprise a low density polyethylene (LDPE).

Preferably, if an LDPE is present in external layer(s) E1 and/or E2, it is used in an amount of 5 to 35 wt.%, more preferably in an amount of from 10 to 30 wt.%, and still more preferably in an amount of from 15 to 25 wt.%.

The LDPE used in layer(s) E1 and/or E2 preferably has a density of 0.905 to 0.945 g/cm³, more preferably of 0.915 to 0.935 g/cm³, and most preferably of 0.918 to 0.927 g/cm³.

Preferably, the LDPE used in layer(s) E1 and/or E2 has a MFR₂ of 0.05 to 10 g/10min, more preferably of 0.1 to 5 g/10min, still more preferably 0.2 to 3 g/10 min, and most preferably 0.4 to 1.5 g/10min.

In one embodiment external layer(s) E1 and/or E2 consist(s) of multimodal ethylene terpolymer (II) and a LDPE as defined herein.

The layered film structure according to the invention may consist of core layer C and external layers E1 and E2, but it may also further comprise one or more intermediate layer(s) I between core layer C and one of external layers E1 and/or E2, for example in a five layer film structure E1/I1/C/I2/E2.

If present, intermediate layer(s) I preferably comprise, or consist of, a LDPE.

The LDPE used in layer(s) I preferably has a density of 0.905 to 0.945 g/cm³, more preferably of 0.915 to 0.935 g/cm³, and most preferably of 0.918 to 0.927 g/cm³.

Preferably, the LDPE used in layer(s) I has a MFR₂ of 0.05 to 10 g/10min, more preferably of 0.1 to 5 g/10min, still more preferably 0.2 to 3 g/10 min, and most preferably 0.4 to 1.5 g/10min.

If more than one intermediate layer I is present it may be made of the same or different material.

The layered film structure of the invention according to any one of the embodiments described herein preferably has a thickness of 60 micrometer or lower, more preferably 50 micrometer or lower.

Core layer C in the layered film structure of the invention preferably has a thickness of 35 to 75 % of the total film structure thickness, more preferably of 40 to 70 % of the total film thickness.

If the film structure of the invention consists of layers E1, C and E2 preferably core layer C has a thickness of 45 to 75 % of the total film structure thickness, more preferably of 50 to 70 % of the total film thickness.

If the film structure of the invention consists of layers E1, I1, C, I2 and E2 preferably core layer C has a thickness of 35 to 65 % of the total film structure thickness, more preferably of 40 to 60 % of the total film thickness.

External layer(s) E1 and/or E2 has/have each preferably a thickness of 5 to 25 % of the total film structure thickness.

If the film structure of the invention consists of layers E1, C and E2 preferably external layer(s) E1 and/or E2 has/have each a thickness of 10 to 25 % of the total film structure thickness, more preferably of 15 to 25 % of the total film thickness.

If the film structure of the invention consists of layers E1, I1, C, I2 and E2 preferably external layers E1 and/or E2 has/have each a thickness of 5 to 20 % of the total film structure thickness, more preferably of 7.5 to 15 % of the total film thickness.

The layered film structure of the invention preferably has a contracting force in machine direction of 2.0 N or higher, more preferably of 2.1 N or higher.

Furthermore, preferably the layered film structure of the invention has a shrinkage in oil at 165 °C in machine direction of 75% or higher.

The present invention also relates to a process for producing a layered film structure according to any one of the above described embodiments wherein the layers of the film structure are co-extruded.

The different polymer components in any of layers of the film are typically intimately mixed prior to layer formation, for example using a twin screw extruder, preferably a counter-rotating extruder. Then, the blends are converted into a coextruded film structure. Preferably, the blends are converted into a coextruded film structure on a blown-film line.

In order to manufacture such multilayer films according to the invention, normally at least two polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well-known process.

The blown coextrusion can be effected at a temperature in the range 160°C to 240°C, and cooled by blowing gas (generally air) at a temperature of 10 to 50°C to provide a frost line height of 1 to 8 times the diameter of the die.

The blow up ratio (BUR) should generally be in the range 1.2 to 6, preferably 1.5 to 4.

The layered film structure of the invention may also have been subjected to a stretching step, wherein the film after its production is stretched in the machine direction (MDO). Stretching may be carried out by any conventional technique using any conventional stretching devices which are well known to those skilled in the art.

The present invention also relates to a collation shrink film comprising or consisting of a layered film structure according to any one of the embodiments as described herein, and to the use of said collation shrink film for wrapping of articles.

In the following, the invention will further be illustrated by way of examples which refer to the following figures which show:
- Fig. 1:: Shrinkage performance of the tested film structures,
- Fig. 2:: Shrinkage in oil of the tested film structures,
- Fig. 3:: Mechanical Properties of the tested film structures,
- Fig. 4:: Optical Properties of the tested film structures, and
- Fig. 5:: Processability of the compositions used for producing the film structures.

### Measurement and Determination Methods

The following definitions of terms and determination methods apply for the above general description of the invention as well as to the below examples unless otherwise defined.

### a) Measurement of melt flow rate MFR

The melt flow rate (MFR) is determined according to ISO 1133 and is indicated in g/10 min. The higher the melt flow rate, the lower the viscosity of the polymer. The MFR is determined at 190 °C for polyethylene and at a loading of 2.16 kg (MFR₂), 5.00 kg (MFR₅) or 21.6 kg (MFR₂₁).

The quantity FRR (flow rate ratio) is an indication of molecular weight distribution and denotes the ratio of flow rates at different loadings. Thus, FRR_{21/5} denotes the value of MFR₂₁/MFR₅.

### b) Density

Density of the polymer was measured according to ISO 1183-1:2019 (method A) on compression moulded specimen prepared according to EN ISO 1872-2 (Feb 2007) and is given in g/cm³.

### c) Viscosity

The viscosity η at 0.05 rad/s was measured in parallel plate dynamic frequency sweep at 190 °C in a dynamic shear measurement which complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190 °C applying a frequency range between 0.01 and 600 rad/s and setting a gap of 1.3 mm.

### d) Contracting Force/Shrinkage

The shrinkage performance both using the Retratech equipment (according to ISO 14616) and oil bath (according to DIN 55543-4) were tested on the collation shrink films both in machine direction and transverse direction.

### e) Mechanical Properties

### Tensile Modulus

Film TD (transversal direction) and MD (machine direction). Tensile moduli in machine and transverse direction were determined acc. to ISO 527-3 on films with a thickness of 25 micrometer or 40 micrometer at a cross head speed of 1 mm/min for the blown film of the inventive examples.

### Trouser Tear Method

Applies for both, for the measurement in machine direction (MD) and transverse direction (TD). The tear resistance is measured using the ISO 6383-1 method.

A rectangular test specimen having a longitudinal slit extending over half its length is subjected to a tensile test on the "trouser legs" formed by the slit. The average force required to tear the specimen completely along its length is used to calculate the tear resistance of the material under test.
Test machine: Zwick Z1.0
Test specimens: 150 mm length, 50 mm width, 75 mm slit, thickness 45 micrometer.
Calculate the tear resistance [N/mm] of the specimen from the formula Ft/d, wherein:
   Ft is the tearing force [N] of the specimen and d is the thickness [mm] of the specimen.

### f) Optical Properties

Gloss, clarity and haze as measures for the optical appearance of the films were determined according to ASTM D2457 (gloss) and ASTM D1003 (haze and clarity). Gloss was determined according to ISO 2813 (ASTM D2457) at an angle of 45°.

### g) Processability

Processability was measured in terms of the maximum pressure which needs to be applied in the extruder for extruding the film structures (cc.Table 3).

### Examples

Seven layered film structures (three according to the invention and 4 comparative) were produced on an Alpine multilayer blown film equipment. All film structures were produced in the same processing conditions (BUR of 1:3, thickness 45 micrometres, die-gap of 1.5 mm, die diameter 300 mm, lower neck-height, internal bubble cooling, cooling air temperature 22 °C). The pressure and temperature process conditions are given separately in Table 3.

The polymers used for making the layered film structures of the invention and of the comparative examples are given in Table 1 below.

**Table 1:**

| **Resin name** | **Producer** | **Type** | **MFR 190°C/2.16kg (g/10min)** | **Density (kg/m³)** | **Slip & antiblock** |
|---|---|---|---|---|---|
| MDPE1 | | Bimodal terpolymer MDPE | 1.3 | 927 | No |
| FX1001 | Borealis | terpolymer LLDPE | 0.85* | 931 | No |
| FX1002 | Borealis | terpolymer LLDPE | 2* | 937 | No |
| Supertough 32ST05 | Total | metallocene C2-C6 copolymer | 0.5 | 932 | No |
| Enable 4002MC | ExxonMobil | Metallocene C2-C6 copolymer MDPE | 0.25 | 940 | No |
| Enable 2703CH | ExxonMobil | Metallocene C2-C6 copolymer | 0.30 | 927 | No |
| Enable 3505CH | ExxonMobil | Metallocene C2-C6 copolymer MDPE | 0.50 | 935 | No |
| HTA 108 | ExxonMobil | homo HDPE | 0.7 | 961 | No |
| FT5236 | Borealis | Tubular LDPE | 0.75 | 923 | Yes |
| FT5230 | Borealis | Tubular LDPE | 0.75 | 923 | No |
| FB1350 | Borealis | Tubular MDPE | 0.6* | 935 | No |
| FT3200 | Borealis | Tubular LDPE | 0.25 | 920 | No |

| | | | | | |
|---|---|---|---|---|---|
| * MFR 190°C/5kg | | | | | |

The composition and structure of the layered films produced are given in Table 2. The thickness of the layers is given in % of the total thickness of the film. All films produced had a total thickness of 45 micrometer. In Table 2 "E" means external layer, "C" means core layer, and "I" means internal layer. The external and internal layers of the films produced had each the same composition and thickness.

**Table 2:**

| Exam ple | Layer structure | Total density | Core Layer Composition: polymers/amount wt.% | | Core layer thickness; density | External Layer Composition: Polymers/amou nt wt.% | | External layers thicknes s; density | Internal layer Compos ition | Internal layers thickne ss; density |
|---|---|---|---|---|---|---|---|---|---|---|
| IE 1 | E/C/E | 0.929 | FX1002 | 46 | 60%; | MDPE1 | 80 | 20 %; | | |
| | | | FT3200 | 44 | 0.932 | FT5236 | 20 | 0.926 | | |
| | | | HTA108 | 10 | | | | | | |
| IE2 | E/C/E | 0.929 | FX1001 | 60 | 60%; | MDPE1 | 80 | 20%; | | |
| | | | FT3200 | 30 | 0.930 | FT5236 | 20 | 0.926 | | |
| | | | HTA108 | 10 | | | | | | |
| IE3 | E/I/C/I/E | 0.931 | FX1002 | 100 | 50%; | MDPE1 | 80 | 10%; | FT5236 | 15%; |
| | | | | | 0.937 | FT5236 | 20 | 0.926 | | 0.923 |
| CE1 | E/C/E | 0.930 | Enable4002MC | 44 | 60%; | MDPE1 | 80 | 20%; | | |
| | | | FT3200 | 46 | 0.933 | FT5236 | 20 | 0.926 | | |
| | | | HTA108 | 10 | | | | | | |
| CE2 | E/C/E | 0.929 | Enable2703CH | 65 | 60%; | MDPE1 | 80 | 20%; | | |
| | | | FT3200 | 20 | 0.930 | FT5236 | 20 | 0.926 | | |
| | | | HTA108 | 15 | | | | | | |
| CE3 | E/C/E | 0.929 | Supert. 32ST05 | 60 | 60%; | MDPE1 | 80 | 20%; | | |
| | | | FT3200 | 30 | 0.931 | FT5236 | 20 | 0.926 | | |
| | | | HTA108 | 10 | | | | | | |
| CE4 | E/C/E | 0.930 | Enable3505CH | 60 | 60%; | MDPE1 | 80 | 20%; | | |
| | | | FT3200 | 30 | 0.933 | FT5236 | 20 | 0.926 | | |
| | | | HTA108 | 10 | | | | | | |

For simplicity, in all figures only the main core layer component is mentioned in the figure labels to designate the layered film.

The following tests have been carried out on the layered films produced:

### Contracting Force/Shrinkage

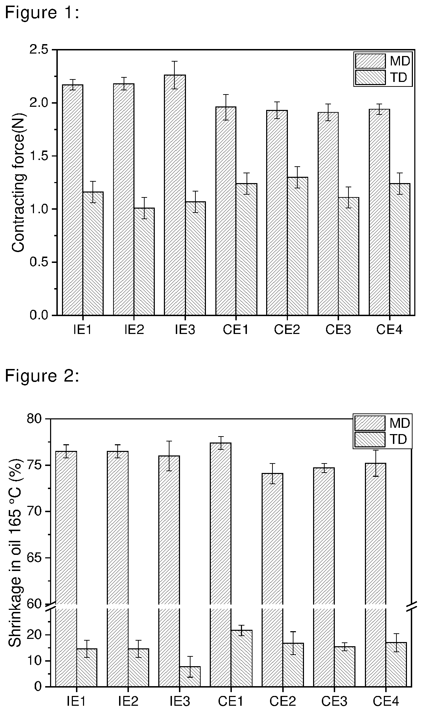

As shown in Figure 1, the shrinking force is higher in the film structures according to the invention (∼ 2.2 to 2.4 N) vs. in the film structures of the comparative examples (≤ 1.9 N). High shrinkage force is favourable for stronger holding of the goods wrapped with the film. Parallel to that, shrinkage in the transverse direction (Figure 2) is also on average at a higher level (∼ 78% vs. 75%).

### Mechanical Properties

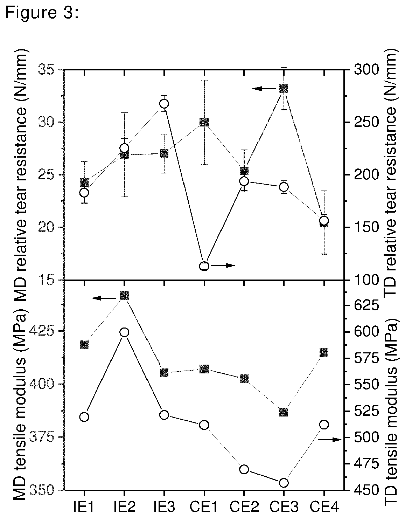

The mechanical data presented in Figure 3 show that the film structures of the invention maintain good mechanical performance in other aspects as well. For example, in TD tear resistance, in particular for IE2 and IE3 is almost double as strong as the comparative examples. Similarly good performance show the inventive examples in TD and MD tensile modulus.

### Optical Properties

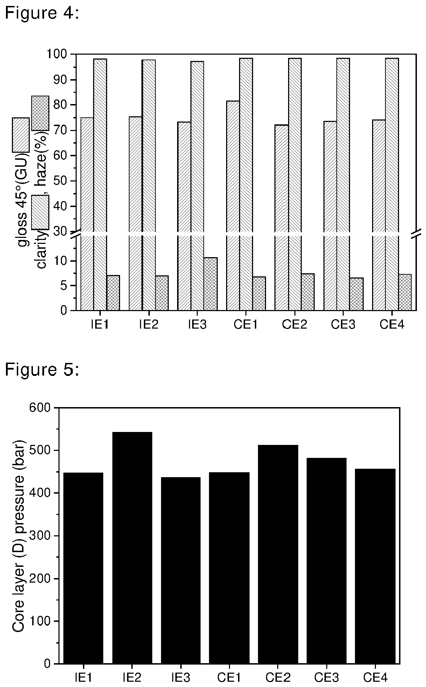

In Figure 4 it is shown that the optical properties are excellent and are maintained as required. The 5-layer version (IE3) has a bit higher haze, but this is also acceptable.

### Processability

The maximum pressure for the inventive examples (Ø450 bar) was always below the comparative examples (Ø480 bar), see Table 3 and Figure 5. Lower pressure indicates better processability. IE2 is a reasonable exception due to the presence of the FX1001, which has lower viscosity, but is a useful trade-off with the rest of the properties.

**Table 3:**

| | **Extruder (melt pressure, bar)** | | | | | | |
|---|---|---|---|---|---|---|---|
| **Designation** | **A** | **B** | **C** | **D** | **E** | **F G** | |
| | **Outer layer** | | **Core layer** | | | **Inner laver** | |
| IE1 | 319 | 290 | 441 | 447 | 444 | 330 | 309 |
| IE2 | 312 | 295 | 548 | 542 | 546 | 341 | 319 |
| IE3 | 320 | 268 | 464 | 436 | 446 | 290 | 317 |
| CE1 | 343 | 309 | 510 | 448 | 493 | 352 | 326 |
| CE2 | 347 | 316 | 509 | 512 | 508 | 357 | 332 |
| CE3 | 345 | 310 | 480 | 481 | 481 | 351 | 327 |
| CE4 | 342 | 308 | 473 | 456 | 461 | 349 | 325 |

| | **Extruder (temperature, °C)** | | | | | | |
|---|---|---|---|---|---|---|---|
| **Designation** | **A** | **B** | **C** | **D** | **E** | **F G** | |
| **Outer** | **Outer layer** | | **Core layer** | | | **Inner laver** | |
| IE1 | 214 | 223 | 238 | 239 | 233 | 222 | 227 |
| IE2 | 214 | 224 | 258 | 254 | 243 | 222 | 227 |
| IE3 | 215 | 209 | 239 | 238 | 230 | 212 | 227 |
| CE1 | 214 | 220 | 240 | 243 | 229 | 222 | 227 |
| CE2 | 214 | 221 | 241 | 247 | 229 | 222 | 227 |
| CE3 | 215 | 222 | 231 | 237 | 219 | 222 | 227 |
| CE4 | 215 | 220 | 239 | 244 | 229 | 222 | 227 |

## Claims

1. A layered film structure comprising a core layer C and external layers E1 and E2, wherein core layer C comprises a multimodal ethylene terpolymer (I) having an MFR₅ determined according to ISO 1133 of from 0.5 to 5 g/10min and a density of 0.928 to 0.940 g/cm³ and wherein external layer(s) E1 and/or E2 comprise(s) a multimodal ethylene terpolymer (II) having an MFR₂ determined according to ISO 1133 of from 0.5 to 10 g/10min and a density of 0.920 to 0.935 g/cm³.

2. The layered film structure according to claim 1 wherein the multimodal ethylene terpolymer (I) is bimodal and is either a terpolymer comprising
a) a low molecular weight homopolymer of ethylene and b) a high molecular weight terpolymer of ethylene, 1-butene and a C₆ to C₁₂ alpha-olefin,
or a terpolymer comprising
a) a low molecular weight polymer which is a binary copolymer of ethylene and a C₄ to C₁₂ alpha-olefin and
b) a high molecular weight polymer which is either a binary copolymer of ethylene and 1-butene, if the low molecular weight polymer of a) is a binary copolymer of ethylene and a C₆ to C₁₂ alpha-olefin, or a terpolymer of ethylene, 1-butene and a C₆ to C₁₂ alpha-olefin.

3. The layered film structure according to claim 1 or 2 wherein multimodal ethylene terpolymer (II) comprises a multimodal polymer of ethylene with at least two different comonomers selected from alpha-olefins having from 4 to 10 carbon atoms, which has a ratio MFR₂₁/MFR₂ of 13 to 30 and a MWD of 5 or less.

4. The layered film structure according to any one of the preceding claims wherein the film structure further comprises one or more intermediate layer(s) I between core layer C and one of external layers E1 and/or E2.

5. The layered film structure according to any one of the preceding claims wherein core layer C comprises 30 wt.% or more of said multimodal ethylene terpolymer (I).

6. The layered film structure according to any one of the preceding claims wherein external layers E1 and/or E2 comprise(s) 60 wt.% or more of said multimodal ethylene terpolymer (II).

7. The layered film structure according to any one of the preceding claims wherein the film structure has a thickness of 60 micrometer or lower.

8. The layered film structure according to any one of the preceding claims wherein core layer C has a thickness of 35 to 70 %, preferably of 40 to 70 % and more preferably of 50 to 70 % of the total film structure thickness.

9. The layered film structure according to any one of the preceding claims wherein external layer(s) E1 and/or E2 has/have a thickness of 10 to 25, preferably of 15 to 25 % of the total film structure thickness.

10. The layered film structure according to any one of the preceding claims wherein external layers E1 and E2 have the same composition.

11. The layered film structure according to any one of the preceding claims wherein the film structure has a contracting force in machine direction of 2.0 N or higher determined according to ISO 14616.

12. The layered film structure according to any one of the preceding claims wherein the film structure has a shrinkage in oil at 165 °C in machine direction of 75% or higher determined according to ISO 14616.

13. A process for producing a layered film structure according to any one of the preceding claims wherein the layers of the film structure are co-extruded.

14. A collation shrink film comprising or consisting of a layered film structure according to any one of claims 1 to 12.

15. Use of a collation shrink film according to claim 14 for wrapping of articles.
